(19) Europäisches Patentamt
European Patent Office
Office européen des brevets

(11) **EP 2 400 679 B1**

(12) **EUROPÄISCHE PATENTSCHRIFT**

(45) Veröffentlichungstag und Bekanntmachung des Hinweises auf die Patenterteilung:
**08.07.2015   Patentblatt 2015/28**

(51) Int Cl.:
*H04J 3/06* <sup>(2006.01)</sup>     *H04L 25/14* <sup>(2006.01)</sup>
*H04J 3/16* <sup>(2006.01)</sup>

(21) Anmeldenummer: **11401523.3**

(22) Anmeldetag: **18.05.2011**

(54) **Empfangsseitige Ermittlung der Zuordnung von im inversen Multiplex übertragenen Teilsignalen zu den Übertragungsstrecken**

Method to determine at the receiver the signal to connection mapping of signals transmitted in inverse multiplex

Procédé récepteur pour l'attribution de signaux transmis en multiplexe inversé aux trajets de transmission

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2010   DE 102010017528**

(43) Veröffentlichungstag der Anmeldung:
**28.12.2011   Patentblatt 2011/52**

(73) Patentinhaber: **ADVA Optical Networking SE 82152 Martinsried / München (DE)**

(72) Erfinder: **Bleck, Oliver 82538 Geretsried (DE)**

(74) Vertreter: **Eder, Thomas Eder Schieschke & Partner mbB Patentanwälte Elisabethstrasse 34/II 80796 München (DE)**

(56) Entgegenhaltungen:
**US-A1- 2005 008 041     US-B1- 6 961 347**

- **"Interfaces for the Optical Transport Network (OTN); G.709/Y.1331 (12/09)", ITU-T STANDARD, INTERNATIONAL TELECOMMUNICATION UNION, GENEVA ; CH, Nr. G.709/Y.1331 (12/09), 22. Dezember 2009 (2009-12-22), Seiten 1-218, XP017467193, [gefunden am 2010-04-21]**

**Beschreibung**

Die Erfindung betrifft ein Verfahren zur Ermittlung zur Zuordnung von im inversen Multiplex, insbesondere über ein Optical Transport Network (OTN), übertragenen Teilsignalen zu den die Teilsignale führenden Übertragungsstrecken mit den Merkmalen des Oberbegriffs des Patentanspruchs 1 sowie eine Empfangseinrichtung für ein System zur Realisierung des Verfahrens mit den Merkmalen des Oberbegriffs des Patentanspruchs 14.

Die Übertragung eines digitalen Signals im inversen Multiplex ermöglicht die Verwendung von mehreren, parallelen Übertragungsstrecken, beispielsweise mehreren parallel verlaufenden Glasfasern, mit geringerer Bandbreite als dies für die Übertragung des digitalen Signals erforderlich wäre. Dabei wird das digitale Signal in mehrere Teilsignale aufgeteilt, die jeweils über eine der parallel verlaufenden Übertragungsstrecken von einer Sendeseite an eine Empfangsseite der Übertragungsstrecken übertragen werden. An der Empfangsseite werden die Teilsignale wieder unter Berücksichtigung der korrekten Reihenfolge der Bits bzw. Bytes, die über unterschiedliche Übertragungsstrecken übertragen wurden, zu einem digitalen Empfangssignal zusammengesetzt. Die Übertragung im inversen Multiplex ermöglicht somit die weitere Verwendung von bestehenden, parallelen Übertragungsstrecken (mit "parallel" ist hier streng genommen nur ausgedrückt, dass die einzelnen Übertragungsstrecken einen gemeinsamen sendeseitigen Anfangspunkt und einen gemeinsamen empfangsseitigen Endpunkt aufweisen), auch wenn ein digitales Sendesignal eine höhere Bandbreite erfordert als die von jeder einzelnen Übertragungsstrecke zur Verfügung gestellte Bandbreite. Auch bestehende Sendeeinheiten und Empfangseinheiten der einzelnen Übertragungsstrecken können ggf. weiter verwendet werden, insbesondere diejenigen Teile, die beispielsweise eine Signalwandlung oder eine Signalaufbereitung der einzelnen Teilsignale bewirken.

Für die optische Signalübertragung über ein Optical Transport Network (OTN) ist im internationalen Standard ITU-T G.709/Y.1331 festgelegt, wie die Übertragung bzw. die Signalverarbeitung an den sendeseitigen und empfangsseitigen Schnittstellen zu erfolgen hat.

Das einem bestimmten Service, beispielsweise einem Optical-channel Transport Unit der Kategorie 3 oder 4 (OTU3 bzw. OTU4 Service), entsprechende digitale Signal wird zur Übertragung im inversen Multiplex in einzelne Teile, die sogenannten Logical Lanes (LL) aufgesplittet, wobei dann jeweils eine einzige oder mehrere LL zu einem Teilsignal zusammengefasst werden können. Jedes der so erzeugten Teilsignale kann dann über jeweils eine zugeordnete Übertragungsstrecke vom sendeseitigen zum empfangsseitigen Ende übertragen werden. Dabei können sich die Laufzeiten der einzelnen Teilsignale gravierend unterscheiden, so dass für das Zusammensetzen der Teilsignale zu einem digitalen Empfangssignal, welches dem digitalen Sendesignal entspricht, eine Synchronisation der Teilsignale derart erfolgen muss, dass die einzelnen Blöcke von Bytes, die jeweils einer LL zugeordnet sind, im digitalen Empfangssignal dieselbe Reihenfolge aufweisen wie im digitalen Sendesignal.

Anders als bei einem einzigen digitalen Signal, welches über eine einzige zugeordnete Übertragungsstecke übertragen wird, wird die Performance der Gesamt-Übertragungsstrecke bei der Übertragung eines Signals im inversen Multiplex durch Parameter der mehreren parallelen Übertragungsstrecken beeinflusst. Es ist daher nötig oder zumindest wünschenswert, Parameter zu ermitteln, welche die Übertragungsqualität der einzelnen parallelen Übertragungsstrecken kennzeichnen. Diese können dann dazu verwendet werden, um alle oder ausgewählte Übertragungsstrecken oder das betreffende digitale Sendesignal jeweils separat so zu beeinflussen, dass sich eine optimale Performance über die betreffende Übertragungsstrecke oder die Gesamt-Übertragungsstrecke ergibt.

Voraussetzung hierfür ist jedoch, dass die Zuordnung der über die einzelnen Übertragungsstrecken übertragenen Teilsignale zur jeweiligen Übertragungsstrecke bekannt ist, d.h. es muss bekannt sein, welches Teilsignal über welche Übertragungsstrecke übertragen wird. Dies ist beim inversen Multiplexen jedoch nicht zwingend bekannt. Denn das Zusammensetzten der einzelnen Teilsignale im Rahmen eines Synchronisations- und De-skewing-Prozesses kann auch ohne eine derartige Kenntnis erfolgen und wird infolge des geringeren Aufwands üblicherweise auch ohne eine derartige Kenntnis durchgeführt.

Ein Verfahren für das Durchführen des Synchronisations- und De-skewing-Prozesses ist beispielsweise in der US 6,961,347 B1 beschrieben. Darüber hinaus ist hier ein Verfahren zur automatischen Konfiguration einer aus mehreren parallelen Teilstrecken bestehenden Übertragungsstrecke beschrieben, wobei hierzu ein Trainingsprozess durchgeführt wird, in dem ein bekanntes Trainings-Datenmuster gleichzeitig über sämtliche Teilstrecken der Übertragungsstrecke übertragen und zugleich empfangsseitig eine Fehlerkorrektur angelernt wird, die für die Datenübertragung im aktiven Betrieb verwendet wird. Hierbei ist es jedoch erforderlich, während des Konfigurationsprozesses sämtliche Teilstrecken mit dem Trainings-Datenmuster zu beaufschlagen, so dass in dieser Phase keinerlei Nutzdaten mehr über die Übertragungsstrecke übertragen werden können.

Die US 2005/0008041 A1 beschreibt ebenfalls eine spezielle Anwendung der Datenübertragung im inversen Multiplex, wobei ein DS3 Signal über vier parallele Twisted Pair Übertragungsstrecken übertragen wird. Auch hier wird jedoch keinerlei Kenntnis betreffend die Zuordnung der Teilsignale zu den jeweiligen Teilübertragungsstrecken erlangt.

Es ist daher Aufgabe der vorliegenden Erfindung ein Verfahren zur Ermittlung zur Zuordnung von im inversen Multiplex, insbesondere über ein Optical Transport Network (OTN), übertragenen Teilsignalen zu den die Teilsignale führenden Übertragungsstrecken zu schaffen, welche mit geringem Aufwand und auf einfache Weise durchführbar ist. Des Weiteren liegt der Erfindung die Aufgabe zugrunde, eine Empfangseinrichtung zur Realisierung eines derartigen Signalübertragungssystems zu schaffen, bei dem das Verfahren nach der Erfindung verwirklicht ist.

Die Erfindung löst diese Aufgabe mit den Merkmalen der Patentansprüche 1 bzw. 14.

Die Erfindung geht von der Erkenntnis aus, dass es durch die Unterbrechung jeweils wenigstens einer Übertragungstrecke auf einfache Weise möglich ist, die über die betreffende Übertragungsstrecke oder die betreffenden Übertragungsstrecken übertragenen Teilsignale zuzuordnen, wobei hierzu lediglich das bereits wieder zusammengesetzte Empfangssignal untersucht werden muss. In diesem Empfangssignal bzw. bereits im ursprünglichen Sendesignal sind ein oder mehrere empfangsseitig erwartete Merkmale enthalten, welche - ggf. in Verbindung mit einer bekannten (und damit empfangsseitig erwarteten Struktur des Empfangssignals) - die Identifizierung der Teilsignale ermöglichen. Selbstverständlich muss vor der Durchführung dieses Zuordnungsverfahrens die empfangsseitige Synchronisation der Teilsignale und ein De-skewing erfolgen, um die Teilsignale wieder zu einem korrekten Empfangssignal zusammensetzen zu können.

Im einfachsten Fall wird man immer nur eine einzige Übertragungsstrecke unterbrechen bzw. abschalten, so dass sofort eindeutig ermittelt werden kann, welches Teilsignal nicht mehr übertragen wird. Es ist jedoch beispielsweise ebenso möglich, sämtliche Übertragungsstrecken bis auf eine einzige zu unterbrechen und dann festzustellen, welches Teilsignal noch übertragen wird. Schließlich ist auch denkbar, jeweils Gruppen von Übertragungsstrecken abzuschalten, und die zugehörigen Teilsignale zu ermitteln. Dies kann beispielsweise erfolgen, um später die Performance der betreffenden Gruppe von Übertragungsstrecken, d.h. die Performance von mehreren parallelen Übertragungsstrecken zu ermitteln.

Auf diese Weise kann für eine bestimmte, für mehrere bestimmte oder für alle Übertragungsstrecken ermittelt werden, welches Teilsignal innerhalb des gesamten digitalen Empfangssignals jeweils über eine bestimmte Übertragungsstrecke übertragen wurde.

Nach einer Ausführungsform der Erfindung weist das Sendesignal eine Rahmenstruktur auf, wobei in jedem Rahmen wenigstens ein Merkmal enthalten ist, welches bei der Aufteilung in die Teilsignale jeweils in einem bestimmten Teilsignal oder in einer bestimmten Komponente eines Teilsignals enthalten ist. Dabei kann die Struktur des Sendesignals, die auch empfangsseitig bekannt ist, mit herangezogen werden, um das Fehlen eines oder mehrerer Teilsignale bzw. das Vorhandensein eines oder mehrerer Teilsignale oder entsprechender Komponenten der Teilsignale zu detektieren. Selbstverständlich kann auch in jeweils einem Teilsignal mindestens ein Merkmal enthalten sein, so dass empfangsseitig für jedes Signal feststellbar ist, welches Teilsignal bzw. welche Teilsignale fehlen bzw. noch vorhanden sind.

An dieser Stelle sei darauf hingewiesen, dass der Begriff der Rahmenstruktur in der vorliegenden Beschreibung nicht nur vordefinierte Rahmen im Sinne des OTN Standards umfassen soll, sondern sämtliche digitalen Signale die eine Rahmen- oder Paketstruktur aufweisen, wie beispielsweise auch nach dem IEEE 802.3 Standard.

Nach einer Ausführungsform der Erfindung ist genau ein innerhalb des Rahmens positionsfestes Merkmal vorgesehen, anhand dessen empfangsseitig identifiziert werden kann, welches Teilsignal oder Komponente eines Teilsignals einem bestimmten Teil eines (ggf. "verstümmelten") Rahmens des Empfangssignals zuzuordnen ist. Dabei kann die Tatsache, dass bzw. ob ein (ggf. "verstümmelter") Rahmen überhaupt ein vollständiges Teilsignal oder eine Komponente eines Teilsignals enthält (bzw. derjenige Teil eines Teilsignals, welches in einem einzigen Rahmen transportiert werden kann), aus der empfangsseitig bekannten und erwarteten Struktur des Empfangssignals bzw. eines Rahmens ermittelt werden.

Erfindungsgemäß kann die Aufteilung der Rahmen in die Teilsignale nach einem rollierenden System derart erfolgen, dass das einzige Merkmal in aufeinanderfolgenden Rahmen oder Gruppen von aufeinanderfolgenden Rahmen in jeweils unterschiedlichen vorbestimmten Teilsignalen oder in jeweils unterschiedlichen Komponenten desselben Teilsignals enthalten ist. Hierdurch ergibt sich ein minimaler "Verwaltungsoverhead" im Sende- bzw. Empfangssignal, so dass das Verfahren auch dann durchführbar ist, wenn die gewählte definierte Rahmenstruktur nur sehr wenig Platz für die Aufnahme des Merkmals aufweist. Dieses kann beispielsweise bei einem OTU4 Service in einem Logical Lane Marker bestehen, der nur ein einziges Byte in einem Rahmen beansprucht und beispielsweise von 0 bis 239 laufen kann. Hierdurch ergibt sich eine Multiframestruktur mit jeweils 240 Rahmen.

Das rollierende System kann so ausgebildet sein, dass nach der Übertragung einer vorbestimmten Anzahl von Rahmen das positionsfeste Merkmal wenigstens einmal in jedem Teilsignal enthalten war und dass für jede Übertragungsstrecke bestimmt wird, welches Teilsignal oder welche Komponenten eines Teilsignals über die betreffende Übertragungsstrecke übertragen wurde.

Bei der Anwendung der Erfindung auf den OTN Standard entsprechen die Komponenten eines Teilsignals den Logical Lanes. Das Sendesignal wird also in eine Anzahl N von Logical Lanes aufgeteilt wird, welche jeweils eine bestimmte Anzahl von Bytes des digitalen Sendesignals beinhalten. Jeweils eine oder mehrere Logical Lanes werden als Komponenten eines Teilsignals zu der Anzahl M von Teilsignalen zusammengefasst, wobei die Zuordnung der Bytes des Sendesignals zu den Logical Lanes und die Zuordnung der Logical Lanes zu den Teilsignalen auch auf der Empfangsseite bekannt ist.

Die Zuordnung der Bytes oder Blöcke von Bytes zu den Logical Lanes erfolgt dabei üblicherweise ebenfalls nach einem rollierenden System. Beispielsweise können bei einem OTU4 Service jeweils 16 aufeinanderfolgende Bytes eines Rahmens nacheinander den Logical Lanes 1,2 .. bis 20 zugeordnet werden. Das rollierende System für die Markierung kann dann darin bestehen, dass der zwischen 0 und 239 rollierende Logical Lane Marker modulo 20 gerechnet (bzw. modulo N gerechnet, wobei N die Anzahl der LL bezeichnet) die Nummer der Logical Lane ergibt, welcher die ersten 16 Bytes des Rahmens zugeordnet werden.

Dies verallgemeinert führt zu folgender Ausgestaltung der Erfindung: Als einziges Merkmal je Rahmen kann an einer vorbestimmten festen Position ein eine Multi-Frame-Struktur definierender rollierender Rahmenzähler vorgesehen sein (z.B. der Logical Lane Marker im Fall eines OTU4 Service), wobei der Zählerwert das rollierende System für die Zuordnung von Bytes oder Blöcken von Bytes zu den Logical Lanes beeinflusst, vorzugsweise den Startwert für einen Logical-Lane-Zähler, welcher das rollierende System für die Zuordnung von Bytes oder Blöcken von Bytes zu den Logical Lanes bestimmt, wobei hierdurch vorzugsweise erreicht wird, dass das Merkmal in aufeinanderfolgenden Rahmen oder Gruppen von aufeinanderfolgenden Rahmen in jeweils unterschiedlichen vorbestimmten Logical Lanes enthalten ist.

Der Rahmenzähler kann zwischen einem Startwert und einem Endwert rollierend zählen, wobei die Anzahl der möglichen Zählerwerte vorzugsweise ein geradzahliges Vielfaches der Anzahl N der Logical Lanes ist und wobei der Startwert $Z_0$ für den Logical-Lane-Zähler vorzugsweise nach der Vorschrift

$$Z_0 = LLM \text{ modulo } N$$

ermittelt wird, wobei mit LLM der Wert des Rahmenzählers bezeichnet ist. Angewandt auf OTN und einen OTU4 Service führt dies zu der vorstehend kurz erläuterten Ausführungsform, wobei der Startwert $Z_0$ für durch N=20 ohne Rest teilbare Werte (d.h. LLM modulo 20 gleich null) gleich Null ist, d.h. in derartigen Rahmen werden die ersten 16 Bytes der Logical Lane Nr. 0 zugeordnet, die zweiten 16 Bytes der Logical Lane Nr. 1 etc.

Nach einer Ausführungsform der Erfindung kann die Unterbrechung der Signalübertragung über eine Übertragungsstrecke durch das Deaktivieren einer der Übertragungsstrecke zugeordneten Empfangseinheit erfolgen. Hierbei ist vorteilhaft, dass lediglich empfangsseitig Abschalt-Zuschalt-Aktionen durchgeführt werden müssen, ohne dass eine Interaktion mit der Sendeseite erforderlich wäre. Nachteilig bei dieser Ausgestaltung der Erfindung ist, dass derzeit für das inverse Multiplexen vorgesehene Komponenten das Abschalten der Empfangsrichtung für die einzelnen Interfaces bzw. Empfangseinheiten der Übertragungsstrecken nicht standardmäßig unterstützen.

Die Unterbrechung der Signalübertragung über eine Übertragungsstrecke kann andererseits auch durch das von der Empfangsseite oder Sendeseite aus gesteuerte Deaktivieren einer der Übertragungsstrecke zugeordneten Sendeeinheit erfolgen. Zur Deaktivierung der Sendeeinheit wird man eine Signalisierung von der Empfangsseite zur Sendeseite vorziehen, wobei man hierzu vorzugsweise eine bidirektionale Kommunikation über die Übertragungsstrecken oder einen separaten Signalisierungkanal vorsehen wird. Dies erfordert jedoch zusätzlichen Aufwand. Vorteilhaft ist jedoch, dass derzeit für das inverse Multiplexen vorgesehene Komponenten das Abschalten der Sendeeinrichtung für die einzelnen Interfaces bzw. Empfangseinheiten der Übertragungsstrecken standardmäßig unterstützen.

Nach einer Ausgestaltung der Erfindung kann das Zuordnen der Teilsignale zu den die Teilsignale führenden Übertragungsstrecken im Fall einer bidirektionalen Übertragung so erfolgen, dass das Verfahren auf beiden Seiten der Übertragungsstrecken jeweils unabhängig von dem auf der anderen Seite ablaufenden Verfahren durchgeführt wird. Die Durchführung der Zuordnung kann dabei auf beiden Seiten zeitlich nacheinander oder auch zeitgleich durchgeführt werden, da bei der Durchführung des Verfahrens für eine bestimmte Übertragungsrichtung immer auch zumindest eine Übertragungsstrecke in der entgegengesetzten Übertragungsrichtung aktiv ist, wenn für diese entgegengesetzte Richtung das Verfahren gleichzeitig durchgeführt wird. Sollte z.B. eine Signalisierung zur jeweiligen Gegenseite zum Zweck des Deaktivierens von Sendeinterfaces zur Durchführung des Verfahrens erforderlich sein, so kann auch eine derartige Signalisierung in der Gegenrichtung über die zumindest eine, in dieser Richtung aktive Übertragungsstrecke erfolgen.

Die Zuordnung lässt sich für die in beiden Übertragungsrichtungen übertragenen Signale auch abhängig voneinander durchführen, wobei das Detektieren der fehlenden bzw. noch vorhandenen Teilsignale in der abhängigen Übertragungsrichtung jeweils für die betreffende wenigstens eine abgeschaltete Übertragungsstrecke erfolgt. Das Abschalten erfolgt dabei von derjenigen Seite der Übertragungsstrecken aus, die als "Master" arbeitet.

Erfolgt das Unterbrechen der Signalübertragung durch das Deaktivieren der zugehörigen Sendeeinheit, so ist es vorteilhaft, wenn während des gesamten Vorgangs des Detektierens auf der Empfangsseite dem zu erfassenden Sendesignal eine bestätigende Kennung hinzugefügt wird, aus welcher empfangsseitig feststellbar ist, dass die wenigstens eine Sendeeinheit noch abgeschaltet ist. Hierdurch kann empfangsseitig erkannt werden, ob die Unterbrechung einer Übertragungsstrecke nicht in fehlerhafter Weise durch einen Ausfall der zugehörigen Sendeeinheit oder durch eine tatsächliche Unterbrechung des Übertragungsmediums, beispielsweise des Lichtwellenleiters erfolgt ist.

Eine Empfangseinrichtung nach der Erfindung zur Realisierung des Verfahrens weist eine der Anzahl der parallelen Übertragungsstrecken entsprechende Anzahl von Empfangseinheiten auf. Diese Empfangseinheiten sind ansteuerbar und von der Empfangseinrichtung deaktivierbar ausgebildet. Die Anforderung für eine Deaktivierung kann dabei entweder von der Empfangseinrichtung selbst oder als Reaktion auf einen entsprechenden sendeseitigen Request generiert werden. Die Empfangseinrichtung ist dabei selbstverständlich so ausgestaltet, dass sie in der Lage ist, das Verfahren durchzuführen. Sie kann insbesondere eine Steuereinheit umfassen, die beispielsweise als Prozessoreinheit oder festverdrahtete oder programmierbare Logik ausgebildet ist.

Weitere Ausgestaltungen der Erfindung ergeben sich aus den Unteransprüchen.

Die Erfindung wird nachfolgend anhand eines in der Zeichnung dargestellten Ausführungsbeispiels näher erläutert. In der Zeichnung zeigen:

Fig. 1 ein schematisches Blockdiagramm der für das Verständnis der Erfindung wesentlichen Funktionseinheiten einer ersten Ausführungsform eines Systems zur Übertragung eines digitalen Signals im inversen Multiplex;

Fig. 2 eine schematische Darstellung einer speziellen Struktur eines Rahmens eines OTU4 Services/Signals gemäß dem Standard ITU-T G.709/Y.1331 (die bei der Verwendung einer bestimmten ODU Multiplexstruktur entsteht);

Fig. 3 eine schematische Darstellung zur Erläuterung der Aufteilung eines digitalen Sendesignals in Byte-Blöcke definierter Länge und der Zuordnung der Byte-Blöcke zu Logical Lanes sowie zur Erläuterung der Zuordnung von Logical Lanes zu jeweils einem von vier Teilsignalen, wobei jedes Teilsignal über eine von vier parallelen Übertragungsstrecken übertragen wird; und

Fig. 4 eine schematische Darstellung des Ablaufs des Zuordnungsverfahrens bei Abschaltung jeweils einer Sendeeinheit einer Übertragungsstrecke.

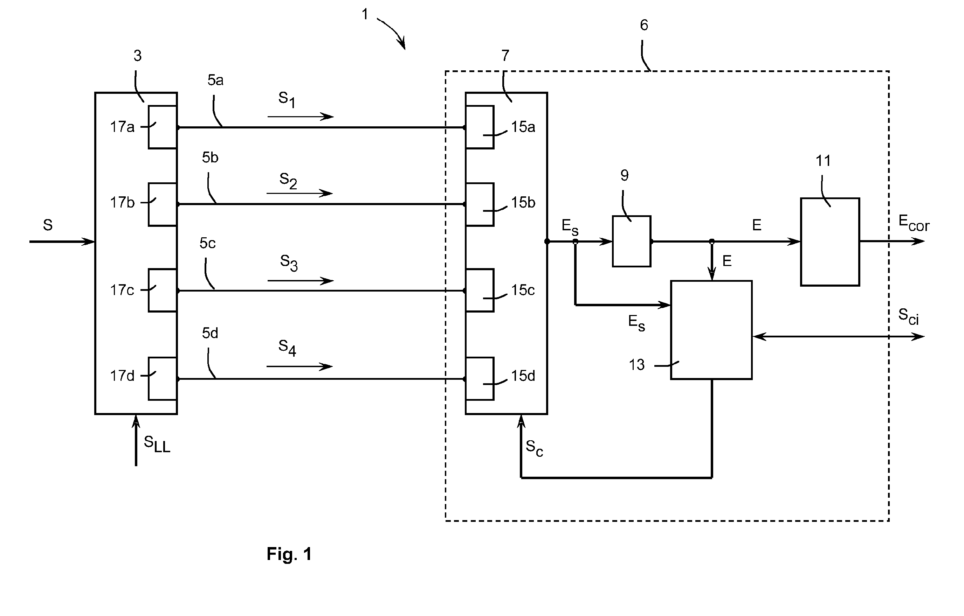

Das in Fig. 1 schematisch dargestellte System 1 zur Übertragung eines digitalen Signals im inversen Multiplex, insbesondere über ein Optical Transport Network (OTN), umfasst eine Sendeeinrichtung 3, welche über mehrere, im dargestellten Ausführungsbeispiel vier physikalische Übertragungsstrecken 5a, 5b, 5c, 5d mit einer Empfangseinrichtung 6 verbunden sind. Die Empfangseinrichtung 6 umfasst eine Empfangseinheit 7, einen De-scrambler 9, eine Vorwärts-Fehlerkorrektureinheit (FEC-Einheit) 11 und eine Detektoreinheit 13.

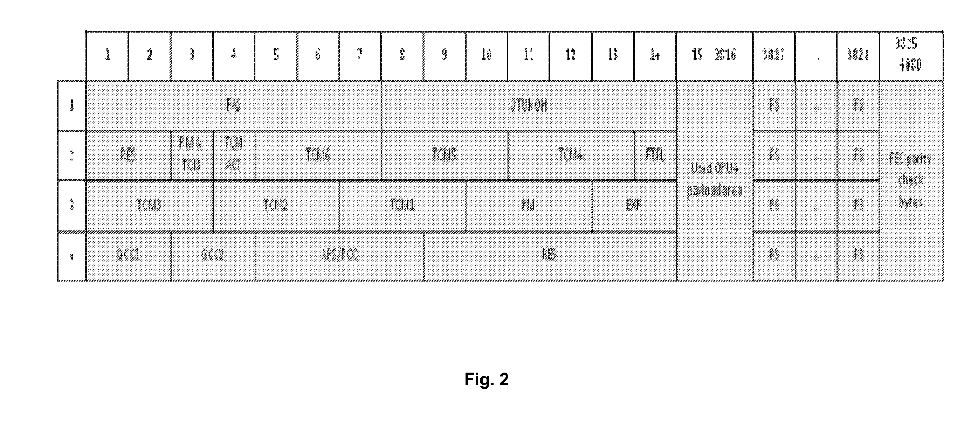

Der Sendeeinrichtung ist ein digitales Sendesignal S zugeführt, welches üblicherweise eine Rahmenstruktur aufweist. Das digitale Sendesignal S kann beispielsweise die Rahmenstruktur eines OTU4 Service gemäß dem internationalen Standard ITU-T G.709/Y.1331 - Interfaces for the Optical Transport Network (OTN) - aufweisen. Eine derartige Darstellung zeigt Fig. 2. Jeder Rahmen des digitalen Sendesignals S besteht dabei aus vier Reihen oder Zeilen von jeweils 4080 Bytes (die selbstverständlich sequentiell im Sendesignal S enthalten sind). Bestimmten Bytes sind bestimmte Funktionen zugeordnet. Beispielsweise handelt es sich bei den ersten sieben Bytes der ersten Zeile eines Rahmens um die Bytes des Frame Alignment Signals (FAS), die zu Synchronisationszwecken verwendet werden. Auf die einzelnen Bedeutungen spezieller Bytes innerhalb des in Fig. 2 dargestellten OTU4 Rahmens muss jedoch in dieser Beschreibung nicht näher eingegangen werden.

Obwohl im Rahmen der folgenden Beschreibung der Figuren im Wesentlichen auf den OTN Standard Bezug genommen wird, lässt sich das allgemeine Prinzip der Erfindung auch auf andere Standards bzw. beliebige Signalformen anwenden bzw. übertragen.

Zur Übertragung des digitalen Sendesignals S im inversen Multiplex über die vier parallelen Übertragungsstrecken 5a, 5b, 5c, 5d splittet die Sendeeinrichtung 3 das digitale Sendesignal S in vier Teilsignale $S_1$, $S_2$, $S_3$ und $S_4$ auf und führt diese den Übertragungsstrecken 5a, 5b, 5c, 5d zu. Vor einem Splitten in die Teilsignale $S_1$, $S_2$, $S_3$ und $S_4$ kann die Sendeeinrichtung 3 das digitale Sendesignal S scrambeln, beispielsweise mit dem Ziel, eine Gleichverteilung der logischen Zustände des Signals zu erreichen.

Für die Aufteilung des Sendesignals S in die Teilsignale $S_1$, $S_2$, $S_3$, $S_4$ sieht der internationale Standard ITU-T G.709/Y.1331 vor, zunächst jeweils Gruppen von aufeinanderfolgenden Bytes des Sendesignals S jeweils einem bestimmten (virtuellen) logischen Teilsignal, einer sogenannten Logical Lane, zuzuordnen. Der Standard sieht in seiner neuesten Version vor, dass ein OTN Service, also ein Sendesignal S, zum Zweck des inversen Multiplexens (d.h. Übertragen des OTN Signals über mehrere physikalische Interfaces) in sogenannte Logical Lanes (LL) aufgeteilt werden kann. Definiert sind derzeit vier LL für einen OTU3 Service sowie 20 LL für einen OTU4 Service.

Die Zuordnung der Bytes des Sendesignals zu den LL kann von der Sendeeinrichtung 3 beispielsweise so vorgenommen werden, dass jeweils Gruppen von 16 aufeinanderfolgenden Bytes zusammengefasst und jede Gruppe einer LL zugeordnet wird. Beispielsweise kann die erste Gruppe von 16 Bytes eines Rahmens eines OTU4 Services der LL mit der Nummer 0 (Kurzschreibweise im Folgenden LL0), die nächste Gruppe von 16 Bytes der LL1 usw. zugeordnet werden.

Die LL können dann von der Sendeeinrichtung entweder einzeln als Teilsignal $S_1$, $S_2$, $S_3$, $S_4$ oder zusammengefasst zu jeweils einem Teilsignal $S_1$, $S_2$, $S_3$, $S_4$ über eine bestimmte Übertragungsstrecke 5a, 5b, 5c, 5d übertragen werden. Das Zusammenfassen von mehreren LL kann beispielsweise so erfolgen, dass jeweils ein oder mehrere Blöcke von Bytes in einer bestimmten oder festen Reihenfolge (bezogen auf die Nummern der LL) sequentiell im betreffenden Teilsignal $S_1$, $S_2$, $S_3$, $S_4$ angeordnet werden.

Die Zuordnung der einzelnen 16-Byte Blöcke zu den LL kann in Abhängigkeit von einem rotierenden Zähler festgelegt werden. Der Zähler kann immer von einem Startwert bis zu einem Maximalwert laufen, der durch die Anzahl der LL bestimmt ist, wobei jeder Gruppe von Bytes jeweils der Zählerstand als Nummer der LL zugewiesen wird, welcher die betreffende Gruppe von Bytes zugeordnet wird. Der Startwert des rotierenden Zählers ist nach dem OTN Standard gleich Null, kann jedoch im Prinzip frei gewählt werden

Zu dem Zweck werden entweder definierte Bits des Multi Frame Alignment Signal Bytes (MFAS Bytes) des OTN Overheads (OH) verwendet (im Fall eines OTU3 Services) oder ein sogenannter Logical Lane Marker (LLM) definiert (für OTU4 Services) der als Teil der FAS Bytes des OTN OH übertragen wird (für die Positionen der einzelnen funktionalen Bytes eines OTU4 Rahmens siehe Fig. 2).

Beispielsweise kann der LLM jeweils zwischen 0 und 239 rotieren, d.h. er wird beginnend bei 0 für den ersten Rahmen einer Multi-Framestruktur mit 240 Rahmen für jeden folgenden Rahmen um eins erhöht. Der Startwert $Z_0$ für den zwischen 0 und N-1 rotierenden Zähler (N soll ganz allgemein für die Anzahl der definierten LL stehen), der die Zuordnung der Blöcke von Bytes zu den LL bestimmt, kann aus dem Wert des LLM ermittelt werden, beispielsweise nach der Beziehung

$$Z_0 = LLM \text{ modulo } 20$$

Damit wird der erste Block von Bytes (16 Byte Block im dargestellten Beispiel) jedes Rahmens der Multi-Framestruktur mit 240 Rahmen, bei dem der LLM ein Vielfaches von 20 ist, der LL0 zugeordnet und die folgenden Blöcke den LL1, LL2 etc. Der erste Block von Bytes jedes Rahmens dieser Multi-Framestruktur, bei dem der LLM gleich 1 bzw. ein Vielfaches von 20 + 1 ist (d.h. LLM modulo 20 = 1), wird der LL1 zugeordnet und die folgenden Blöcke den LL2, LL3 etc. Auf diese Weise erhält man ein rollierendes System, bei dem sich in jeder 240 Rahmenstruktur die Zuordnung der Blöcke von Bytes eines Rahmens zu den LL zwölf mal wiederholt.

Dadurch, dass das erste Byte der vorbekanten Bitstruktur in das erste Byte des reservierten Blocks von Bytes eines Rahmens mit einer vorbekannten Markierung geschrieben wird, nämlich mit einem LLM mit bestimmtem Wert, kann auf der Empfangsseite eine einfache Synchronisierung auf die vorbekannte Bitstruktur erfolgen. Die Empfangseinrichtung 6 muss lediglich die betreffende Markierung (z.B. den LLM) daraufhin prüfen, welchen Wert diese aufweist und kann daraus den in diesem Rahmen aufgenommenen Teil der vorbekannten Bitstruktur bzw. die betreffende Soll-Belegung zur Prüfung auf Bitfehler heranziehen.

Die Information, wie die Zuordnung der Blöcke von Bytes des digitalen Sendesignals S zu den LL und die Zuordnung der LL zu den Teilsignalen $S_1$, $S_2$, $S_3$, $S_4$ erfolgt, kann in der Sendeeinrichtung 3 fest vorgegeben (beispielsweise gespeichert) sein oder dieser von einer nicht näher dargestellten Einheit mittels eines Signals $S_{LL}$ zugeführt werden. Diese Information kann selbstverständlich auch in gleicher Weise der Empfangseinrichtung 6, insbesondere der Empfangseinheit 7, zugeführt sein, wodurch sich das nachstehend erläuterte Verfahren erübrigen würde. Allerdings wäre hierdurch ein zusätzlicher Kommunikationsaufwand bedingt, der nach Möglichkeit vermieden werden soll.

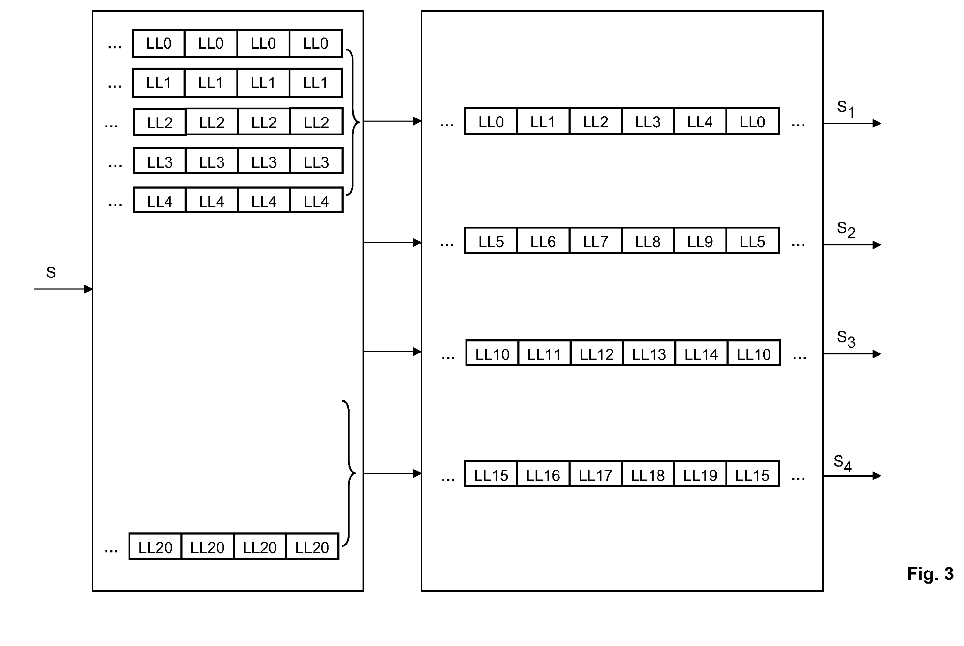

Fig. 3 zeigt schematisch die Zuordnung von Byte Blöcken (beispielsweise 16-Byte Blöcken) des digitalen Sendesignals S zu den 20 Logical Lanes eines OTU4 Services und die Zuordnung von im dargestellten Beispiel jeweils fünf LL zu jeweils einem Teilsignal $S_1$, $S_2$, $S_3$, $S_4$. Dabei sind die LL0 bis LL4 dem Teilsignal $S_1$, die LL5 bis LL9 dem Teilsignal $S_2$, die LL10 bis LL14 dem Teilsignal $S_3$ und die LL15 bis LL19 dem Teilsignal $S_4$ zugeordnet. Im Teilsignal $S_1$, $S_2$, $S_3$, $S_4$ werden die Byte Blöcke der jeweils fünf Logical Lanes jeweils in der dargestellten, sich wiederholenden Reihenfolge übertragen.

Die Zuordnung der LL zu den Teilsignalen $S_1$, $S_2$, $S_3$, $S_4$ und die Zuordnung der Teilsignale $S_1$, $S_2$, $S_3$, $S_4$ zu den Übertragungsstrecken 5a, 5b, 5c, 5d kann statisch sein oder ggf. auch dynamisch verändert werden. Eine dynamische Veränderung muss jedoch hinsichtlich ihrer Struktur (d.h. des zeitlichen Ablaufs der Veränderung und der Änderung der Zuordnung) auch der Empfangsseite bekannt sein, so dass nach einer erstmaligen Synchronisation und einem erstmaligen Ermitteln der Zuordnung auf der Empfangsseite die dynamische Veränderung laufend bekannt ist bzw. nachvollzogen werden kann.

Es ist jedoch auch möglich, bei jeder Veränderung der Zuordnung der LL zu den Teilsignalen $S_1$, $S_2$, $S_3$, $S_4$ oder der Zuordnung der Teilsignale $S_1$, $S_2$, $S_3$, $S_4$ zu den Übertragungsstrecken 5a, 5b, 5c, 5d die Tatsache der Veränderung der Zuordnung von der Sendeseite zur Empfangsseite zu signalisieren (beispielsweise durch Setzen eines vorbestimmten Bits, vorzugsweise im letzten oder einem der letzten Rahmen des digitalen Sendesignals S, welche noch entsprechend der aktuellen Zuordnung übertragen werden), so dass die Empfangseinrichtung 6 nach Detektieren eines derartigen "Zuordnungs-Änderungssignals" den Vorgang zur Ermittlung der Zuordnung erneut starten kann. Eine zunächst statische Zuordnung kann beispielsweise dann geändert werden, wenn ein schwerer Übertragungsfehler aufgetreten ist (z.B. ein loss-of-light).

Bei der in Fig. 1 dargestellten Ausführungsform eines Systems 1 zur Übertragung eines digitalen Signals im inversen Multiplex werden die einzelnen Teilsignale $S_1$, $S_2$, $S_3$, $S_4$ am empfangsseitigen Ende der Übertragungsstrecken 5a, 5b, 5c, 5d wieder zu einem zunächst noch gescrambelten digitalen Empfangssignal $E_s$ zusammengefasst. Hierzu muss der Empfangseinrichtung 7 selbstverständlich bekannt sein, wie die Zuordnung der 16-Byte Blöcke der Rahmen des Sendesignals S zu den LL erfolgt ist. Hiervon soll im Folgenden ausgegangen werden, wobei der hierfür nötige Synchronisierungs- und De-skewing-Prozess, der in der Empfangseinheit 7 ablaufen kann, nicht dargestellt wird, da er für das Verständnis der vorliegenden Erfindung ohne Belang ist. Diese Synchronisation läuft jedoch üblicherweise so ab, dass empfangsseitig keine oder nur unzureichende Informationen über die Zuordnung der LL zu den Teilsignalen $S_1$, $S_2$, $S_3$, $S_4$ bzw. über die Zuordnung der Teilsignale $S_1$, $S_2$, $S_3$, $S_4$ zu den Übertragungsstrecken 5a, 5b, 5c, 5d gewonnen werden oder derartige Informationen für die Synchronisation und das De-skewing erforderlich sind.

Der Synchronisations- und De-skewing-Prozess ist auch unmittelbar durch die Auswertung der (noch gescrambelten) Teilsignale $S_1$, $S_2$, $S_3$, $S_4$ möglich, da die hierfür erforderliche Information in einem nicht-gescrambelten Teil des Rahmens (beispielsweise dem Header) enthalten ist.

Das so erzeugte, noch gescrambelte Empfangssignal $E_s$ wird einem De-scrambler 9 zugeführt, der den Scrambling-Prozess, der in der Sendeeinrichtung 3 durchgeführt wurde, rückgängig macht und auf diese Weise das Empfangssignal E erzeugt. Auf das Empfangssignal E kann eine Vorwärtsfehlerkorrektur angewendet werden, wozu das Empfangssignal E einer dem De-scrambler nachgeschalteten Vorwärtsfehlerkorrektureinheit (FEC-Einheit) 11 zugeführt wird, welche ein fehlerkorrigiertes Signal $E_{cor}$ erzeugt.

Das Empfangssignal E wird gleichzeitig einer Detektoreinheit 13 zugeführt. Die Detektoreinheit 13 kennt ebenfalls die Byte-Positionen derjenigen Bytes innerhalb eines Rahmens des Empfangssignals E, in welchen eine vorbekannte Bitstruktur enthalten ist und vergleicht die (entsprechenden relevanten Teile der) Bitstruktur mit der tatsächlich in den betreffenden Bytes des Empfangssignals enthaltenen (ggf. fehlerbehaftet übertragenen) Bitstruktur. Auf diese Weise kann die Detektoreinheit 13 fehlerhaft übertragene Bits feststellen und die Bitfehlerrate für die gesamte Übertragungsstrecke ermitteln.

Darüber hinaus kann die Detektoreinheit die Information, wie die 16-Byte Blöcke des Sendesignals S auf die LL aufgeteilt wurden und wie die Zuordnung der LL zu den Teilsignalen $S_1$, $S_2$, $S_3$, $S_4$ erfolgt ist dazu verwenden, um zu ermitteln über welche Übertragungsstrecke $S_1$, $S_2$, $S_3$, $S_4$ ein bestimmtes relevantes Byte übertragen wurde, in dem ein Teil der vorbekannten Bitstruktur enthalten ist.

Damit kann die Detektoreinheit 13 die detektierten Bitfehlerraten auch jeweils dem Teilsignal $S_1$, $S_2$, $S_3$, $S_4$ zuordnen, bzw. der betreffenden Übertragungsstrecke, und hierfür eine Bitfehlerrate ermitteln.

Im einfachsten Fall können die einer der Übertragungsstrecken 5a, 5b, 5c, 5d zugeordneten spezifischen Bitfehlerraten dazu genutzt werden, um die in der Empfangseinheit 7 enthaltenen Empfänger-Interfaces 15a, 15b, 15c, 15d, welche das jeweils zugeführte Teilsignal $S_1$, $S_2$, $S_3$, $S_4$ empfangen, hinsichtlich ihrer Entscheiderschwelle zur Unterscheidung der Bitwerte logisch "0" von logisch "1" so anzusteuern, dass die betreffende spezifische Bitfehlerrate minimal wird oder einen vorgegebenen Grenzwert unterschreitet. Dies ist in Fig. 1 durch das Ansteuersignal $S_c$ dargestellt, welches der Empfangseinheit 7 von der Detektoreinheit 13 zugeführt ist.

Durch das Zuführen des noch gescrambelten Signals $E_s$ an die Detektoreinheit 13 kann diese zusätzlich Informationen über die Fehlerart ermitteln, insbesondere ob das (im gescrambelten Signal) fehlerhaft übertragene Bit den Wert logisch "0" oder logisch "1" hatte. Auch benachbarte Bits können hinsichtlich ihres Wertes ermittelt werden, so dass Informationen gewonnen werden können, innerhalb welcher Bitfolgen die Fehler bestimmter Art aufgetreten sind. Hieraus können ebenfalls Rückschlüsse über die Fehlerursachen gezogen werden und zur Behebung oder Linderung der betreffenden Einflüsse verwendet werden. Beispielsweise können bestimmte Fehlermuster auf Dispersionseinflüsse auf der optischen Strecke hindeuten, so dass abhängig von der spezifischen Fehlerrate für dieses Muster ein Dispersionskompensator nachgeregelt werden kann.

Das empfangsseitige Detektieren der Zuordnung der LL zu den Teilsignalen $S_1$, $S_2$, $S_3$, $S_4$ bzw. der Teilsignale $S_1$, $S_2$, $S_3$, $S_4$ zu den Übertragungsstrecken 5a, 5b, 5c, 5d kann dadurch erfolgen, dass die Signalübertragung über jeweils eine oder mehrere der Übertragungsstrecken 5a, 5b, 5c, 5d unterbrochen und dabei jeweils erfasst wird, welche LL bzw. welche Teilsignale $S_1$, $S_2$, $S_3$, $S_4$ noch vorhanden sind bzw. infolge der Unterbrechung fehlen. Die Unterbrechung der Signalübertragung kann entweder dadurch erfolgen, dass jeweils eines oder mehrere der Empfänger-Interfaces 15a, 15b, 15c, 15d deaktiviert werden oder eines oder mehrere der Sender-Interfaces 17a, 17b, 17c, 17d, die von der Sendeeinrichtung 3 umfasst sind.

Das Deaktivieren eines oder mehrerer Empfänger-Interfaces 15a, 15b, 15c, 15d kann von der Empfangseinheit 7 (oder einer anderen Komponente der Empfangseinrichtung 6, beispielsweise einer speziellen, nicht dargestellten Steuereinrichtung zur Durchführung des Zuordnungsprozesses) ausgelöst werden, wobei das auslösende Ereignis in der Empfangseinheit 7 selbst generiert werden kann oder als Reaktion auf ein vorstehend kurz angesprochenes Zuordnungs-Änderungssignal, welches der Empfangseinheit 7 von der Sendeeinrichtung 3 zugeführt wird.

Im letztgenannten Fall kann eine Komponente der Empfangseinrichtung 6, beispielsweise die FEC-Einheit 11, vorzugsweise durch Auswertung des fehlerkorrigierten Signals $E_{cor}$ das Zuordnungs-Änderungssignal detektieren. Das Zuordnungs-Änderungssignal kann jedoch auch in einem speziellen Bereich eines Rahmens enthalten sein, der nicht sendeseitig gescrambelt wird. Hierbei kann es sich beispielsweise um den Header oder einen Teil des Headers handeln. In diesem Fall kann die Empfangseinheit 7 unmittelbar das noch gescrambelte Empfangssignal Es auswerten. Wo das Zuordnungs-Änderungssignal detektiert wird bzw. von welcher Einheit der Empfangseinrichtung ist jedoch letztlich für das eigentliche Detektieren der Zuordnung der LL zu den Teilsignalen $S_1$, $S_2$, $S_3$, $S_4$ bzw. zu den Übertragungsstrecken 5a, 5b, 5c, 5d unerheblich.

Als Reaktion auf ein auslösendes Ereignis startet die Empfangseinrichtung 6 den Lern- bzw. Zuordnungsprozess. Hierzu kann die Empfangseinrichtung 6, insbesondere die Empfangseinheit 7, beispielsweise jeweils genau ein Empfänger-Interface 15a, 15b, 15c, 15d deaktivieren und im verbleibenden "Rest-Empfangssignal" (das hinsichtlich der Struktur, insbesondere der Byteanzahl und/oder hinsichtlich des Contents unvollständige Rahmen aufweisen kann) detektieren, welche LL noch im Signal vorhanden sind. Bei der vorstehend erläuterten Zuordnung von Blöcken von Bytes zu den LL und der Zuordnung von LL zu den Teilsignalen $S_1$, $S_2$, $S_3$, $S_4$ (vgl. Fig. 3) kann die Empfangseinrichtung 6 (insbesondere die Empfangseinheit 7) aus dem Logical Lane Marker LLM ermitteln, welche LL noch vorhanden sind, wenn eine bestimmt Übertragungsstrecke 5a, 5b, 5c, 5d abgeschaltet ist. Hierzu muss lediglich der LLM ausgewertet werden. Sind beispielsweise durch Anwendung der Beziehung

$$Z_0 = LLM \text{ modulo } 20$$

im Empfangssignal keine Rahmen mehr vorhanden, für die $Z_0$ die Werte 0, 1, 2 oder 3 annimmt, so kann die Empfangseinrichtung 6 hieraus schließen, dass die Strecke 1 abgeschaltet ist (allerdings ggf. ohne genau den Verlauf bzw. die Bezeichnung dieser Strecke zu kennen). Eine Ermittlung von Signaleigenschaften der LL mit den Nummern 0, 1, 2 und 3, z.B. die Ermittlung der Bitfehlerrate für diese LL, kann dann beispielsweise dazu verwendet werden, um Eigenschaften des betreffenden Empfänger-Interfaces 15a derart zu beeinflussen, dass die Performance über die Übertragungsstrecke 5a verbessert wird. Dies kann beispielsweise durch eine Beeinflussung der Entscheiderschwelle geschehen, wie vorstehend erläutert.

Anschließend kann die betreffende erste Übertragungsstrecke bzw. das zugehörige Empfänger-Interface wieder aktiviert und eine weitere, andere Übertragungsstrecke in gleicher Weise deaktiviert und wiederum ermittelt werden, welche LL bzw. welches Teilsignal dieser Übertragungsstrecke zugeordnet sind.

Bereits nach dem Durchlaufen des so beschaffenen Teilprozesses für eine weitere von, im dargestellten Beispiel vier Übertragungsstrecken (ganz allgemein: nach dem M-1 maligen Durchlaufen des Teilprozesses), steht eindeutig fest, welche LL bzw. welches Teilsignal $S_1$, $S_2$, $S_3$, $S_4$ welcher Übertragungsstrecke 5a, 5b, 5c, 5d zugeordnet ist. Selbstverständlich kann "sicherheitshalber" auch noch die letzte Übertragungsstrecke deaktiviert werden, beispielsweise um Fehler bei der Detektion möglichst ausschließen zu können.

Damit steht nach Beendigung des Lernprozesses fest, welches der Teilsignale $S_1$, $S_2$, $S_3$, $S_4$ über welche der Übertragungsstrecken 5a, 5b, 5c, 5d übertragen wird, zumindest dann, wenn während des Lernzyklus keine überlagernden Fehler aufgetreten sind. Diese Information kann beispielsweise in Form einer Zuweisungstabelle zwischen den LL und Empfänger-Interfaces zur Verfügung gestellt werden.

Da für diese Methode lediglich die Empfänger-Interfaces selektiv deaktiviert werden, wird, um eine Unabhängigkeit von der Sendeseite zu gewährleisten (diese muss dieselben Aktionen zur gleichen Zeit ausführen dürfen), vorzugsweise während des gesamten Lernzyklus die Signalübertragung in der jeweiligen Übertragungsrichtung, für welche der Lernprozess durchgeführt wird, aufrecht erhalten.

Sollten zeitgleich mit dem betreffenden Lernzyklus Fehler auf mindestens einer der Übertragungsstrecken oder den zugeordneten Sende- oder Empfängerinterfaces auftreten (z.B. ein Loss-of-Signal am Empfänger-Interface), wird der Lernzyklus erfolglos abgebrochen und zu einem den Startbedingungen des Algorithmus passenden späteren Zeitpunkt erneut gestartet. In diesem Fall wird abgewartet, bis erneut ein erfolgreiches Synchronisieren und De-skewing erfolgt ist.

An dieser Stelle sei erwähnt, dass das Deaktivieren eines Empfänger-Interfaces nicht ein vollständiges Abschalten der betreffenden Hardware erforderlich macht, vielmehr genügt es, das Weiterreichen des empfangenen Teilsignals an die nachgeschaltete Verarbeitung zu unterbinden.

Selbstverständlich können anstelle der Deaktivierung jeweils eines einzigen Empfänger-Interfaces auch mehrere, insbesondere alle bis auf ein einziges Empfänger-Interface deaktiviert werden. In diesem Fall kann unmittelbar detektiert werden, welche LL der nichtdeaktivierten Übertragungsstrecke bzw. dem betreffenden Empfänger-Interface zugeordnet sind.

Der Lernprozess kann, wie vorstehend beschrieben, muss jedoch nicht notwendigerweise aller Übertragungsstrecken erfassen. Es kann, abhängig von der Ausbildung der einzelnen Übertragungsstrecken auch genügen, die Zuordnung der LL zu dem oder den betreffenden Teilsignalen von einer oder mehreren ausgewählten Übertragungsstrecken zu ermitteln.

Soll der Lernzyklus nicht durch das Deaktivieren der Empfänger-Interfaces 15a, 15b, 15c, 15d, sondern durch das Deaktivieren der Sender-Interfaces 17a, 17b, 17c, 17d der Sendeeinrichtung 3 erfolgen, so wird eine Signalisierung zwischen der Empfangsseite und der Sendeseite benötigt. Diese kann aus einem separaten, möglichst einfach gehaltenen Signalisierungskanal bestehen. Ist die Übertragung über die Übertragungsstrecken bidirektional aufgebaut, so kann die Signalisierung über das in der jeweiligen Gegenrichtung übertragene digitale Sendesignal erfolgen. In diesem Fall sind sämtliche in Fig. 1 dargestellten sende- und empfangsseitigen Komponenten zusätzlich jeweils "spiegelbildlich" vorhanden, d.h. auf der Sendeseite in Fig. 1 sind zusätzlich auch alle Komponenten auf der Empfangsseite in Fig. 1 vorhanden und umgekehrt. Die eigentlichen Übertragungsstrecken 5a, 5b, 5c, 5d, also das eigentliche Datenübertragungsmedium, kann in diesem Fall entweder bidirektional genutzt werden oder für jede Übertragungsrichtung separat (also insgesamt doppelt) vorgesehen sein.

Anstelle einer Deaktivierung eines oder mehrerer ausgewählter Empfänger-Interfaces 15a, 15b, 15c, 15d kann die Empfangseinrichtung 6 zur Durchführung eines Lernzyklus für die in Fig. 1 dargestellte Signalübertragungsrichtung der Sendeseite signalisieren, dass (anstelle der ausgewählten Empfänger-Interfaces 15a, 15b, 15c, 15d) die entsprechenden Sender-Interfaces 17a, 17b, 17c, 17d der Sendeeinrichtung 3 deaktiviert bzw. aktiviert werden sollen.

Der Lernzyklus im Übrigen läuft dann ab, wie vorstehend für das Deaktivieren der Empfänger-Interfaces beschrieben.

Auch bei dieser Variante ist es sinnvoll, wenn im Fall einer bidirektionalen Übertragung beide Seiten unabhängig voneinander diesen Lernzyklus durchlaufen können. Ein gekoppelter/synchronisierter Algorithmus ist jedoch ebenfalls möglich.

Weiterhin ist es sinnvoll - wenn auch nicht zwingend notwendig - unterscheiden zu können, ob ein Loss-of-Signal an einem Empfänger-Interface und damit das Fehlen der betreffenden LL auf ein gewünschtes Abschalten zurückgeführt werden kann oder ein davon unabhängiger Fehlerfall aufgetreten ist.

Dies kann dadurch gewährleistet werden, dass von der jeweiligen Sendeseite eine entsprechende Rückmeldung bzw. Signalisierung so lange erfolgt, wie das einzige oder die mehreren Sender-Interfaces bewusst aufgrund des Lernzyklus abgeschaltet sind. Wenn die betreffende Signalisierung nicht empfangen werden kann, so kann von einer anderen Fehlerursache ausgegangen werden und der Lernzyklus wird vorzugsweise mit einer hierauf verweisenden Fehlermeldung abgebrochen werden.

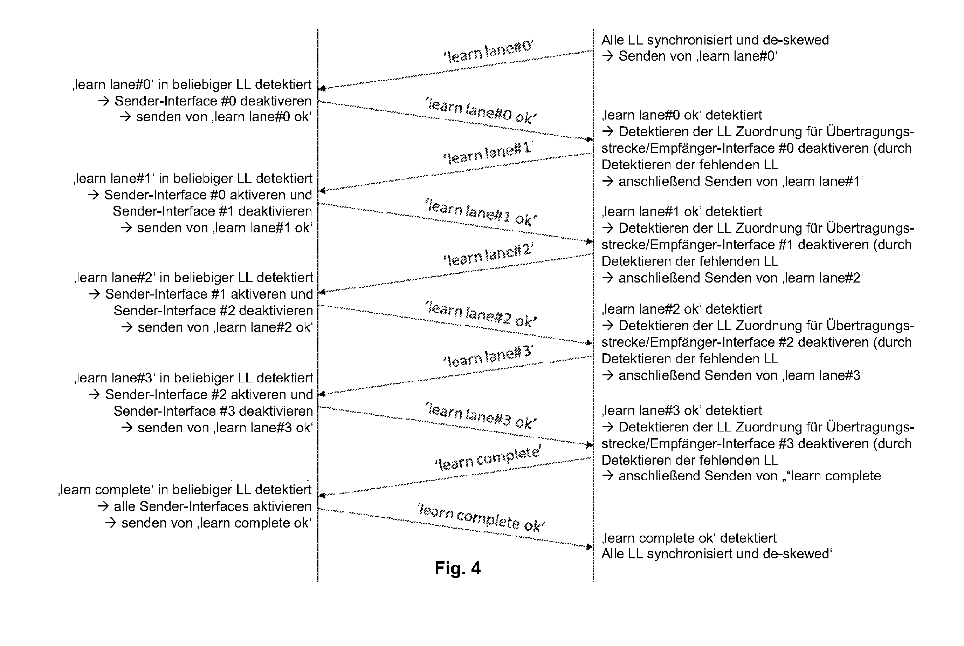

Eine mögliche Abfolge eines solchen Lernzyklus für die Alternative der Abschaltung jeweils eines Sender-Interfaces ist exemplarisch in Fig. 4 dargestellt.

Hierbei wird der Prozess von dem auf der rechten Seite in Fig. 4 dargestellten Modul angestoßen bzw. gesteuert. Die linke Seite folgt der Signalisierung indem sie die entsprechenden Senderichtungen der angeforderten Sender-Interfaces deaktiviert oder aktiviert. Bezogen auf Fig. 1 kann das in Fig. 4 rechts dargestellte Modul beispielsweise in der Empfangseinheit 7 bzw. der Empfangseinrichtung 6 ablaufen und das in Fig. 4 links dargestellte Modul in der Sendeeinrichtung 3.

In dem in Fig. 4 gezeigten Beispiel können die 20 LL in beliebiger Zuordnung gleichmäßig auf die vier Übertragungsstrecken 5a, 5b, 5c, 5d verteilt sein (wie in Fig. 1 und 3 gezeigt). Der Algorithmus ist einfach erweiterbar, um andere Zuordnungen oder Fehlertoleranzen zu beinhalten.

Stellt die Empfangseinrichtung fest, dass ein Lernzyklus gestartet werden soll, so sendet sie unter der Voraussetzung dass alle LL synchronisiert und de-skewed sind (d.h. das digitale Empfangssignal wird korrekt empfangen) den Befehl ‚learn lane#0', d.h. die erste Übertragungsstrecke, beispielsweise die Übertragungsstrecke 5a, soll durch das Deaktivierung des zugehörigen Sender-Interfaces 17a stillgelegt bzw. die betreffende Übertragung des Signals $S_1$ unterbrochen werden. Auf der Senderseite wird (nach Empfang des betreffenden Signals mittels der im bidirektionalen Fall vorhandenen Empfangseinrichtung) als Reaktion auf diesen Befehl das gewünschte Sender-Interface 17a deaktiviert. Anschließend wird die Quittung ‚learn lane#0 ok" gesendet.

Infolge der vorstehend erläuterten rollierenden Zuordnung der LL zu den Teilsignalen $S_1$, $S_2$, $S_3$, $S_4$ wird dieser Befehl in jedem Fall empfangen, da er irgendwann über ein aktiviertes Empfänger-Interface gesendet wird.

Um gewährleisten zu können, dass die Signalisierung auch dann noch zur Verfügung steht wenn beliebige LL ausfallen (hierzu muss infolge der rollierenden Zuordnung immer mindestens eine LL verfügbar sein, wenn kein anderer Fehlerfall vorliegt) ist es generell vorteilhaft, die Signalisierung innerhalb eines 16-Byte Blocks (wie für LL Zerlegung des OTN Service definiert) zu übertragen.

Dadurch ist gewährleistet, dass die zur Signalisierung verwendeten Bytes mindestens einmal pro 20 OTN Rahmen empfangen wird.

Vorteilhaft ist es weiterhin, die Signalisierung in den ersten 16 Bytes eines Rahmens zu übertragen da diese immer einer LL zugehören und immer zusammen mit den FAS/ MFAS Bytes in derselben LL übertragen werden, die nach dem einschlägigen Standard zum Synchronisieren des OTN Signals verwendet werden.

Nach Empfang dieser Quittung durch die Empfangseinrichtung 6 führt diese einen Zuordnungsprozess durch. Die fehlenden bzw. noch vorhandenen LL werden ermittelt. Diese Information kann dann in einer Zuordnungstabelle gespeichert werden.

Anschließend sendet die Empfangseinrichtung 7 den Befehl ‚learn lane#1 Nach dessen Detektieren auf der Sendeseite wird das zuvor abgeschaltete Sender-Interface 17a wieder aktiviert und statt dessen das jetzt gewünschte Sender-Interface, z.B. das Interface 17b deaktiviert. Dies wird wieder quittiert.

Dieses Vorgehen wird solange wiederholt, bis jedes Sender-Interface bzw. jede zugehörige Übertragungsstrecke deaktiviert war und der betreffende Zuordnungsprozess durchgeführt wurde. Die Zuordnungstabelle ist damit komplett.

Abschließend wird lediglich noch der Befehl ‚learn complete' an die Sendeseite übermittelt, welche daraufhin wieder alle Interfaces aktiviert und dies anschließend noch mit der Nachricht ‚learn complete ok' quittiert.

Sämtliche in Verbindung mit der Variante des Deaktivierens von Empfänger-Interfaces beschriebenen Varianten, können auch im Fall der vorstehend beschriebenen Variante der Abschaltung von Sender-Interfaces eingesetzt werden, beispielsweise das Deaktiveren von mehreren oder M-1 Interfaces. Der schematisch in Fig. 4 dargestellte Algorithmus muss dann selbstverständlich in geeigneter Weise angepasst werden.

Insgesamt ermöglicht das vorgestellte Verfahren zur Zuordnung von Teilsignalen zu Übertragungsstrecken die Gewinnung der gewünschten Information in einem von der jeweiligen Empfangseinrichtung durchgeführten bzw. zumindest gesteuerten Verfahren, ohne dass diese Information von der Sendeseite zur Empfangsseite übertragen werden müsste.

Abschließend sei darauf hingewiesen, dass die in den Fig. 1 dargestellten Einheiten, insbesondere die Einheiten, die Bestandteil der Empfangseinrichtung 6 sind, nicht als eigenständige Einheiten ausgeführt sein müssen, sondern die betreffende Funktionalität in einer oder mehreren physikalischen Einheiten, durch Hard- oder Software, realisiert sein kann.

**Patentansprüche**

1. Verfahren zur Ermittlung der Zuordnung von im inversen Multiplex, insbesondere über ein Optical Transport Network, OTN, übertragenen Teilsignalen zu den die Teilsignale führenden Übertragungsstrecken mit folgenden Verfahrensschritten:

   (a) Ein zu übertragendes digitales Sendesignal wird in eine bestimmte Anzahl M von mehreren Teilsignalen aufgeteilt, wobei jedes Teilsignal einer Sendeseite einer diesem Teilsignal zugeordneten Übertragungsstrecke an eine Empfangsseite der zugeordneten Übertragungsstrecke übertragen wird;
   (b) An den Empfangsseiten der Übertragungsstrecken werden die Teilsignale wieder zu einem digitalen Empfangssignal zusammengesetzt;

   **gekennzeichnet durch** folgende weitere Verfahrensschritte:
   (c) Nach erfolgter empfangsseitiger Synchronisation für das korrekte Zusammensetzen der Teilsignale zu dem digitalen Empfangssignal wird die Signalübertragung über wenigstens eine vorbestimmte Übertragungsstrecke für einen Detektionsvorgang zur Ermittlung der Zuordnung der Teilsignale zu den Übertragungsstrecken unterbrochen;
   (d) Es wird empfangsseitig während des Detektionsvorgangs zur Ermittlung der Zuordnung der Teilsignale zu den Übertragungsstrecken im digitalen Empfangssignal anhand eines oder mehrerer erwarteter Merkmale der Teilsignale detektiert, welches Teilsignal oder welche Teilsignale noch im digitalen Empfangssignal enthalten oder welches Teilsignal oder welche Teilsignale nicht mehr im digitalen Empfangssignal enthalten sind; und
   (e) Die Schritte (c) und (d) werden so oft für bestimmte verschiedene einzelne Übertragungsstrecken oder für bestimmte verschiedene Kombinationen von mehreren Übertragungsstrecken durchgeführt, bis ausreichende Informationen verfügbar sind, um für eine vorbestimmte, mehrere vorbestimmte oder alle Übertragungsstrecken zu ermitteln, welches Teilsignal über die betreffende vorbestimmte Übertragungsstrecke übertragen wird.

2. Verfahren nach Anspruch 1, **dadurch gekennzeichnet, dass** das Sendesignal eine Rahmenstruktur aufweist und dass in jedem Rahmen ein oder mehrere Merkmal enthalten sind, wobei bei der Aufteilung in die Teilsignale jeweils ein Merkmal einem bestimmten Teilsignal oder in einer bestimmten Komponente eines Teilsignals zugeordnet wird.

3. Verfahren nach Anspruch 2, **dadurch gekennzeichnet, dass** genau ein innerhalb des Rahmens positionsfestes Merkmal vorgesehen ist, und dass die Aufteilung der Rahmen in die Teilsignale nach einem rollierenden System derart erfolgt, dass das Merkmal in aufeinanderfolgenden Rahmen oder Gruppen von aufeinanderfolgenden Rahmen in jeweils unterschiedlichen vorbestimmten Teilsignalen oder in jeweils unterschiedlichen Komponenten desselben Teilsignals enthalten ist.

4. Verfahren nach Anspruch 3, **dadurch gekennzeichnet, dass** das rollierende System so ausgebildet ist, dass nach der Übertragung einer vorbestimmten Anzahl von Rahmen das positionsfeste Merkmal wenigstens einmal in jedem Teilsignal oder in jeder Komponente eines Teilsignals enthalten war und dass für jede Übertragungsstrecke bestimmt wird, welches Teilsignal oder welche Komponenten eines Teilsignals über die betreffende Übertragungsstrecke übertragen wurden.

5. Verfahren nach einem der Ansprüche 2 bis 4, **dadurch gekennzeichnet, dass** das Sendesignal in eine Anzahl N von Logical Lanes aufgeteilt wird, welche jeweils eine bestimmte Anzahl von Bytes des digitalen Sendesignals beinhalten, wobei jeweils eine oder mehrere Logical Lanes als Komponenten eines Teilsignals zu der Anzahl M von Teilsignalen zusammengefasst wird und wobei die Zuordnung der Bytes des Sendesignals zu den Logical Lanes und die Zuordnung der Logical Lanes zu den Teilsignalen auch auf der Empfangsseite bekannt ist.

6. Verfahren nach Anspruch 5, **dadurch gekennzeichnet, dass** die Zuordnung der Bytes oder Blöcken von Bytes zu den Logical Lanes nach einem rollierenden System erfolgt.

7. Verfahren nach einem der Ansprüche 4 bis 6, **dadurch gekennzeichnet, dass** als einziges Merkmal je Rahmen an einer vorbestimmten festen Position ein eine Multi-Frame-Struktur definierender rollierender Rahmenzähler vorgesehen ist, wobei der Zählerwert das rollierende System für die Zuordnung von Bytes oder Blöcken von Bytes zu den Logical Lanes beeinflusst,

8. Verfahren nach Anspruch 7, **dadurch gekennzeichnet, dass** der Rahmenzähler den Startwert für einen Logical-Lane-Zähler beeinflusst, welcher das rollierende System für die Zuordnung von Bytes oder Blöcken von Bytes zu den Logical Lanes bestimmt, wobei hierdurch erreicht wird, dass das Merkmal in aufeinanderfolgenden Rahmen oder Gruppen von aufeinanderfolgenden Rahmen in jeweils unterschiedlichen vorbestimmten Logical Lanes enthalten ist.

9. Verfahren nach Anspruch 8, **dadurch gekennzeichnet, dass** der Rahmenzähler zwischen einem Startwert und einem Endwert rollierend zählt, wobei die Anzahl der möglichen Zählerwerte ein geradzahliges Vielfaches der Anzahl N der Logical Lanes ist und wobei der Startwert $Z_0$ für den Logical-Lane-Zähler nach der Vorschrift

$$Z_0 = \text{LLM modulo } N$$

ermittelt wird, wobei mit LLM der Wert des Rahmenzählers bezeichnet ist.

10. Verfahren nach einem der vorhergehenden Ansprüche, **dadurch gekennzeichnet, dass** die Unterbrechung der Signalübertragung über eine Übertragungsstrecke durch das Deaktivieren einer der Übertragungsstrecke zugeordneten Empfangseinheit erfolgt.

11. Verfahren nach einem der Ansprüche 1 bis 9, **dadurch gekennzeichnet, dass** die Unterbrechung der Signalübertragung über eine Übertragungsstrecke durch das von der Empfangsseite aus gesteuerte Deaktivieren einer der Übertragungsstrecke zugeordneten Sendeeinheit erfolgt und dass zur Deaktivierung der Sendeeinheit eine Signalisierung von der Empfangsseite zur Sendeseite erfolgt

12. Verfahren nach Anspruch 11, **dadurch gekennzeichnet, dass** die Übertragung bidirektional erfolgt, dass das Zuordnen der Teilsignale zu den die Teilsignale führenden Übertragungsstrecken auf beiden Seiten der Übertragungsstrecken für jeweils eine vorbestimmte Übertragungsrichtung erfolgt und dass die Zuordnung der Teilsignale zu den Übertragungsstrecken in der jeweiligen Übertragungsrichtung unabhängig vom Detektieren der Zuordnung der Teilsignale zu den Übertragungsstrecken in der jeweils anderen Übertragungsrichtung durchgeführt wird, wobei die Durchführung der Zuordnung auf beiden Seiten zeitlich nacheinander durchgeführt wird.

13. Verfahren nach Anspruch 11, **dadurch gekennzeichnet, dass** die Übertragung bidirektional erfolgt, dass das Zuordnen der Teilsignale zu den die Teilsignale führenden Übertragungsstrecken auf beiden Seiten der Übertragungsstrecken für jeweils eine vorbestimmte Übertragungsrichtung erfolgt und dass die Zuordnung der Teilsignale zu den Übertragungsstrecken in der jeweiligen Übertragungsrichtung abhängig vom Detektieren der Zuordnung der Teilsignale zu den Übertragungsstrecken in der jeweils anderen Übertragungsrichtung durchgeführt wird, wobei das Detektieren der fehlenden bzw. noch vorhandenen Teilsignale in der abhängigen Übertragungsrichtung jeweils für die wenigstens eine abgeschaltete Übertragungsstrecke erfolgt.

14. Verfahren nach einem der Ansprüche 11 bis 13, **dadurch gekennzeichnet, dass** während des gesamten Vorgangs des Detektierens auf der Empfangsseite dem zu erfassenden Sendesignal eine bestätigende Kennung hinzugefügt wird, aus welcher empfangsseitig feststellbar ist, dass die wenigstens eine Sendeeinheit noch abgeschaltet ist.

15. Empfangseinrichtung für ein System zur Übertragung eines digitalen Signals im inversen Multiplex, insbesondere über ein Optical Transport Network, OTN,

(a) bei dem eine Sendeeinrichtung ein zu übertragenes digitales Sendesignal in mehrere Teilsignale aufteilt und jeweils jedes Teilsignal einer Sendeseite einer ausschließlich diesem Teilsignal zugeordneten Übertragungsstrecke zuführt, und

(b) bei dem die Empfangseinrichtung die zu einer Empfangsseite der mehreren Übertragungsstrecken übertragenen Teilsignale wieder zu einem digitalen Empfangssignal zusammensetzt,

**dadurch gekennzeichnet,**

(c) **dass** die Empfangseinrichtung jeweils der Empfangsseite jeder Übertragungsstrecke zugeordnete Empfangseinheiten aufweist,

(d) **dass** die Empfangseinheiten ansteuerbar und von der Empfangseinrichtung deaktivierbar ausgebildet sind,

(i) wobei das Deaktivieren einer oder mehrerer Empfangseinheiten entweder infolge einer in der Empfangseinrichtung selbst generierten Ursache erfolgt, oder

(ii) wobei das Deaktivieren einer oder mehrerer Empfangseinheiten infolge von der Empfangseinrichtung im Empfangssignal detektierten Ursache erfolgt, und

(e) **dass** die Empfangseinrichtung so ausgebildet ist, dass sie die Verfahrensschritte nach einem der vorhergehenden Ansprüche durchführt.

**Claims**

1. A method for determining the association of sub-signals transmitted in inverse multiplexing, in particular by way of an optical transport network OTN, with the transmission sections guiding the sub-signals, having the following method steps:

(a) a digital transmit signal that is to be transmitted is divided into a certain number M of a plurality of sub-signals, wherein each sub-signal of a transmit side of a transmission section associated with this sub-signal is transmitted to a receive side of the associated transmission section;

(b) at the receive sides of the transmission sections the sub-signals are reassembled to form a digital receive signal,

**characterised by** the following further method steps:

(c) after synchronization has been effected on the receive side for the correct assembly of the sub-signals to form the digital receive signal the signal-transmission by way of at least one predetermined transmission section is interrupted for a detection process to determine the association of the sub-signals with the transmission sections;

(d) on the receive side during the detection process to determine the association of the sub-signals with the transmission sections in the digital receive signal with the aid of one or a plurality of expected features of the sub-signals it is detected which sub-signal or which sub-signals is/are still contained in the digital receive signal or which sub-signal or which sub-signals is/are no longer contained in the digital receive signal; and

(e) the steps (c) and (d) are carried out as many times as required for certain different individual transmission sections or for certain different combinations of a plurality of transmission sections until sufficient information is available in order to determine for one predetermined, a plurality of predetermined or all the transmission sections which sub-signal is transmitted by way of the relevant predetermined transmission section.

2. A method according to claim 1, **characterised in that** the transmit signal has a frame structure, and one or a plurality of features is/are contained in each frame, wherein during the division into the sub-signals in each case one feature is associated with a certain sub-signal or in a certain component of a sub-signal.

3. A method according to claim 2, **characterised in that** precisely one feature with a fixed position within the frame is provided, and the division of the frames into the sub-signals is effected according to a rolling system in such a way that the feature is contained in successive frames or groups of successive frames in, in each case, different predetermined sub-signals or in, in each case, different components of the same sub-signal.

4. A method according to claim 3, **characterised in that** the rolling system is configured in such a way that after the transmission of a predetermined number of frames the fixed-position feature was contained at least once in each sub-signal or in each component of a sub-signal, and for each transmission section it is determined which sub-signal or which components of a sub-signal was/were transmitted by way of the relevant transmission section.

5. A method according to one of claims 2 or 4, **characterised in that** the transmit signal is divided into a number N of logical lanes which each contain a certain number of bytes of the digital transmit signal, wherein in each case one or a plurality of logical lanes as components of a sub-signal is/are assembled to form the number M of sub-signals, and wherein the association of the bytes of the transmit signal with the logical lanes and the association of the logical lanes with the sub-signals is also known on the receive side.

6. A method according to claim 5, **characterised in that** the association of the bytes or blocks of bytes with the logical lanes is effected according to a rolling system.

7. A method according to one of the claims 4 to 6, **characterised in that** provided as a single feature per frame at a predetermined fixed position there is a rolling frame-counter defining a multi-frame structure, wherein the counter value influences the rolling system for the association of bytes or blocks of bytes with the logical lanes.

8. A method according to claim 7, **characterised in that** the frame-counter influences the start value for a logical-lane-counter which determines the rolling system for the association of bytes or blocks of bytes with the logical lanes, wherein the result that is achieved is that the feature is contained in successive frames or groups of successive frames in, in each case, different predetermined logical lanes.

9. A method according to claim 8, **characterised in that** the frame-counter counts in a rolling manner between a start value and an end value, wherein the number of possible counter values is an even-numbered multiple of the number N of logical lanes, and wherein the start value $Z_0$ for the logical-lane-counter is determined according to the expression

$$Z_0 = \text{LLM modulo } N$$

wherein the value of the frame-counter is denoted by LLM.

10. A method according to one of the preceding claims, **characterised in that** the interruption of the signal-transmission over a transmission section is effected by means of the deactivation of a receive unit associated with the transmission section.

11. A method according to one of claims 1 to 9, **characterised in that** the interruption of the signal-transmission over a transmission section is effected by means of the deactivation, controlled from the receive side, of a transmit unit associated with the transmission section, and signalling from the receive side to the transmit side is effected in order to deactivate the transmit unit.

12. A method according to claim 11, **characterised in that** the transmission is effected bidirectionally, the association of the sub-signals with the transmission sections guiding the sub-signals is effected on both sides of the transmission sections for, in each case, one predetermined transmission direction, and the association of the sub-signals with the transmission sections in the respective transmission direction is carried out independently of the detection of the association of the sub-signals with the transmission sections in the other respective transmission direction, wherein the association is carried out on both sides successively in time.

13. A method according to claim 11, **characterised in that** the transmission is effected bidirectionally, the association of the sub-signals with the transmission sections guiding the sub-signals is effected on both sides of the transmission sections for, in each case, one predetermined transmission direction, and the association of the sub-signals with the transmission sections in the respective transmission direction is carried out in a manner dependent upon the detection of the association of the sub-signals with the transmission sections in the other respective transmission direction, wherein the detection of the missing or sill present sub-signals in the dependent transmission direction is effected in each case for the at least one disabled transmission section.

14. A method according to one of claims 11 to 13, **characterised in that** throughout the process of detection on the receive side added to the transmit signal that is to be acquired there is a confirmatory identifier from which it is possible to ascertain on the receive side that the at least one transmit unit is still disabled.

15. A receive device for a system for transmitting a digital signal in inverse multiplexing, in particular by way of an optical transport network OTN,

(a) in which a transmit device divides a digital transmit signal that is to be transmitted into a plurality of sub-signals and in each case feeds each sub-signal to a transmit side of a transmission section associated exclusively with this sub-signal; and
(b) in which the receive device reassembles the sub-signals, transmitted to a receive side of the plurality of transmission sections, to form a digital receive signal,
**characterised in that**
(c) the receive device has receive units associated in each case with the receive side of each transmission section,
(d) the receive units are configured so that they can be activated and so that they can be deactivated by the receive device,

(i) wherein the deactivation of one or a plurality of receive units is effected either in consequence of a cause generated in the receive device itself, or
(ii) wherein the deactivation of one or a plurality of receive units is effected in consequence of a cause detected by the receive device in the receive signal, and

(e) the receive device is configured in such a way that it carries out the method steps according to one of the preceding claims.

## Revendications

1. Procédé pour déterminer l'affectation des sous-signaux transmis en multiplexage inverse, en particulier par l'intermédiaire d'un réseau de transport optique, OTN, aux voies de transmission guidant les sous-signaux, comportant les étapes suivantes :

(a) un signal d'émission numérique à transmettre est divisé en un nombre M déterminé de plusieurs sous-signaux, chaque sous-signal d'un côté émetteur d'une voie de transmission associée à ce sous-signal étant transmis vers un côté récepteur de la voie de transmission associée ;
(b) sur les côtés récepteurs des voies de transmission, les sous-signaux sont à nouveau assemblés pour former un signal de réception numérique ;
**caractérisé par** les étapes supplémentaires suivantes :
(c) après la synchronisation réalisée du côté récepteur pour l'assemblage correct des sous-signaux résultant dans le signal de réception numérique, la transmission des signaux sur au moins une voie de transmission prédéterminée est interrompue pour un processus de détection destiné à déterminer l'affectation des sous-signaux aux voies de transmission ;
(d) pendant le processus de détection destiné à déterminer l'affectation des sous-signaux aux voies de transmission, il est détecté du côté récepteur dans le signal de réception numérique à l'appui d'une ou de plusieurs caractéristiques attendues des sous-signaux, quel sous-signal ou quels sous-signaux sont encore contenus dans le signal de réception numérique ou quel sous-signal ou quels sous-signaux ne sont plus contenus dans le signal de réception numérique ; et
(e) les étapes (c) et (d) sont mises en oeuvre pour différentes voies de transmission individuelles déterminées ou pour différentes combinaisons déterminées de plusieurs voies de transmission, jusqu'à ce que des informations suffisantes soient disponibles pour déterminer, pour une voie de transmission prédéterminée, pour plusieurs voies de transmission prédéterminées ou pour toutes les voies de transmission, quel sous-signal est transmis via la voie de transmission prédéterminée concernée.

2. Procédé selon la revendication 1, **caractérisé en ce que** le signal d'émission comporte une structure en cadre et **en ce qu'**une ou plusieurs caractéristiques sont contenues dans chaque cadre, respectivement une caractéristique étant affectée à un sous-signal déterminé ou dans une composante déterminée d'un sous-signal, au moment de la division en sous-signaux.

3. Procédé selon la revendication 2, **caractérisé en ce qu'**il est prévu exactement une caractéristique fixe à l'intérieur du cadre, et **en ce que** la division des cadres en sous-signaux est effectuée selon un système de roulement, de telle sorte que, dans des cadres consécutifs ou groupes de cadres consécutifs, la caractéristique est contenue dans des sous-signaux prédéterminés respectivement différents ou dans des composantes respectivement différentes du même sous-signal.

4. Procédé selon la revendication 3, **caractérisé en ce que** le système de roulement est configuré de telle sorte que, après la transmission d'un nombre prédéterminé de cadres, la caractéristique fixe était contenue au moins une fois dans chaque sous-signal ou dans chaque composante d'un sous-signal, et **en ce que** pour chaque voie de transmission il est déterminé quel sous-signal ou quelles composantes d'un sous-signal ont été transmis via la voie de transmission concernée.

5. Procédé selon l'une quelconque des revendications 2 à 4, **caractérisé en ce que** le signal d'émission est divisé en nombre N de pistes logiques (logical lanes), qui contiennent chacune un nombre déterminé d'octets du signal d'émission numérique, respectivement une ou plusieurs pistes logiques étant assemblées au nombre M de sous-signaux pour former les composantes d'un sous-signal, et l'affectation des octets du signal d'émission aux pistes logiques et l'affectation des pistes logiques aux sous-signaux étant connues aussi du côté récepteur.

6. Procédé selon la revendication 5, **caractérisé en ce que** l'affectation des octets ou blocs d'octets aux pistes logiques est effectuée selon un système de roulement.

7. Procédé selon l'une quelconque des revendications 4 à 6, **caractérisé en ce que** comme seule caractéristique par cadre au niveau d'une position fixe prédéterminée, il est prévu un compteur de cadres à roulement définissant une structure multi-cadre, la valeur des compteurs influençant le système de roulement pour l'affectation des octets ou blocs d'octets aux pistes logiques.

8. Procédé selon la revendication 7, **caractérisé en ce que** le compteur de cadre influence la valeur de départ pour un compteur de pistes logiques, lequel détermine le système de roulement pour l'affectation des octets ou blocs d'octets aux pistes logiques, cela permettant d'obtenir que la caractéristique est contenue dans des cadres consécutifs ou groupes de cadres consécutifs dans chacune des différentes pistes logiques prédéterminées.

9. Procédé selon la revendication 8, **caractérisé en ce que** le compteur de cadres compte par roulement entre une valeur de début et une valeur de fin, le nombre des valeurs possibles du compteur étant un multiple pair du nombre N de pistes logiques et la valeur de départ $Z_0$ pour le compteur de pistes logiques étant déterminée selon la condition suivante :

$$Z_0 = \text{LLM modulo } N,$$

dans laquelle LLM désigne la valeur du compteur de cadres.

10. Procédé selon l'une quelconque des revendications précédentes, **caractérisé en ce que** la transmission des signaux via une voie de transmission est interrompue sous l'effet de la désactivation d'une unité de réception affectée à la voie de transmission.

11. Procédé selon l'une quelconque des revendications 1 à 9, **caractérisé en ce que** la transmission des signaux via une voie de transmission est interrompue sous l'effet de la désactivation, commandée à partir du côté récepteur, d'une unité d'émission affectée à la voie de transmission, et **en ce qu'**une signalisation depuis le côté récepteur vers le côté émetteur est effectuée en vue de la désactivation de l'unité d'émission.

12. Procédé selon la revendication 11, **caractérisé en ce que** la transmission est une transmission bidirectionnelle, **en ce que** l'affectation des sous-signaux aux voies de transmission guidant les sous-signaux est effectuée sur les deux côtés des voies de transmission pour respectivement une direction de transmission prédéterminée, et **en ce que** l'affectation des sous-signaux aux voies de transmission dans la direction de transmission respective est effectuée indépendamment de la détection de l'affectation des sous-signaux aux voies de transmission dans respectivement l'autre direction de transmission, l'affectation étant mise en oeuvre sur les deux côtés successivement dans le temps.

13. Procédé selon la revendication 11, **caractérisé en ce que** la transmission est une transmission bidirectionnelle, **en ce que** l'affectation des sous-signaux aux voies de transmission guidant les sous-signaux est effectuée sur les deux côtés des voies de transmission pour respectivement une direction de transmission prédéterminée, et **en ce que** l'affectation des sous-signaux aux voies de transmission dans la direction de transmission respective est effectuée en fonction de la détection de l'affectation des sous-signaux aux voies de transmission dans respectivement l'autre direction de transmission, la détection des sous-signaux manquants ou encore présents dans la direction de transmission dépendante étant effectuée respectivement pour ladite au moins une voie de transmission déconnectée.

14. Procédé selon l'une quelconque des revendications 11 à 13, **caractérisé en ce que** pendant tout le processus de détection sur le côté récepteur, le signal d'émission à détecter reçoit un identifiant de confirmation, qui permet de constater du côté récepteur que ladite au moins une unité d'émission est encore déconnectée.

15. Dispositif de réception pour un système permettant la transmission d'un signal numérique en multiplexage inverse, en particulier par l'intermédiaire d'un réseau de transport optique, OTN,

(a) dans lequel un dispositif d'émission divise en plusieurs sous-signaux un signal d'émission numérique à transmettre et respectivement chaque sous-signal est acheminé vers un côté émetteur d'une voie de transmission associée exclusivement à ce sous-signal, et
(b) dans lequel le dispositif de réception assemble à nouveau en un signal de réception numérique les sous-signaux transmis vers un côté récepteur de la pluralité de voies de transmission, **caractérisé**
(c) **en ce que** le dispositif de réception comporte des unités de réception associées chacune au côté récepteur de chaque voie de transmission,
(d) **en ce que** les unités de réception peuvent être commandées et sont réalisées de manière à pouvoir être désactivées par le dispositif de réception,

(i) la désactivation d'une ou de plusieurs unités de réception étant effectuée à la suite d'une cause générée dans le dispositif de réception lui-même, ou

(ii) la désactivation d'une ou de plusieurs unités de réception étant effectuée à la suite d'une cause détectée par le dispositif de réception dans le signal de réception, et

(e) **en ce que** le dispositif de réception est configuré de telle sorte qu'il met en oeuvre les étapes du procédé selon l'une des revendications précédentes.

Fig. 1

EP 2 400 679 B1

**Fig. 2**

| | 1 | 2 | 3 | 4 | 5 | 6 | 7 | 8 | 9 | 10 | 11 | 12 | 13 | 14 | 15 16 | 3817 | . | 3824 | 3825-4080 |
|---|---|---|---|---|---|---|---|---|---|---|---|---|---|---|---|---|---|---|---|
| 1 | FAC | | | | | | | OTU OH | | | | | | | | FS | .. | FS | FEC parity check bytes |
| 2 | RES | PM & TCM | TCM ACT | TCM6 | | | | TCM5 | | | TCM4 | | | PTTL | Used OPU4 payload area | FS | .. | FS | |
| 3 | TCM3 | | | TCM2 | | | TCM1 | | | PM | | | EXP | | | FS | .. | FS | |
| 4 | GCC1 | | GCC2 | | APS/PCC | | | RES | | | | | | | | FS | .. | FS | |

EP 2 400 679 B1

18

EP 2 400 679 B1

S

LL0 LL0 LL0 LL0
LL1 LL1 LL1 LL1
LL2 LL2 LL2 LL2
LL3 LL3 LL3 LL3
LL4 LL4 LL4 LL4

LL20 LL20 LL20 LL20

LL0 LL1 LL2 LL3 LL4 LL0    $S_1$

LL5 LL6 LL7 LL8 LL9 LL5    $S_2$

LL10 LL11 LL12 LL13 LL14 LL10    $S_3$

LL15 LL16 LL17 LL18 LL19 LL15    $S_4$

Fig. 3

Alle LL synchronisiert und de-skewed
→ Senden von ‚learn lane#0'

'learn lane#0'

‚learn lane#0' in beliebiger LL detektiert
→ Sender-Interface #0 deaktiveren
→ senden von ‚learn lane#0 ok'

'learn lane#0 ok'

‚learn lane#0 ok' detektiert
→ Detektieren der LL Zuordnung für Übertragungs-
strecke/Empfänger-Interface #0 deaktiveren (durch
Detektieren der fehlenden LL
→ anschließend Senden von ‚learn lane#1'

'learn lane#1'

‚learn lane#1' in beliebiger LL detektiert
→ Sender-Interface #0 aktiveren und
Sender-Interface #1 deaktivieren
→ senden von ‚learn lane#1 ok'

'learn lane#1 ok'

‚learn lane#1 ok' detektiert
→ Detektieren der LL Zuordnung für Übertragungs-
strecke/Empfänger-Interface #1 deaktiveren (durch
Detektieren der fehlenden LL
→ anschließend Senden von ‚learn lane#2'

'learn lane#2'

‚learn lane#2' in beliebiger LL detektiert
→ Sender-Interface #1 aktiveren und
Sender-Interface #2 deaktivieren
→ senden von ‚learn lane#2 ok'

'learn lane#2 ok'

‚learn lane#2 ok' detektiert
→ Detektieren der LL Zuordnung für Übertragungs-
strecke/Empfänger-Interface #2 deaktiveren (durch
Detektieren der fehlenden LL
→ anschließend Senden von ‚learn lane#3'

'learn lane#3'

‚learn lane#3' in beliebiger LL detektiert
→ Sender-Interface #2 aktiveren und
Sender-Interface #3 deaktivieren
→ senden von ‚learn lane#3 ok'

'learn lane#3 ok'

‚learn lane#3 ok' detektiert
→ Detektieren der LL Zuordnung für Übertragungs-
strecke/Empfänger-Interface #3 deaktiveren (durch
Detektieren der fehlenden LL
→ anschließend Senden von „"learn complete

'learn complete'

‚learn complete' in beliebiger LL detektiert
→ alle Sender-Interfaces aktivieren
→ senden von ‚learn complete ok'

'learn complete ok'

‚learn complete ok' detektiert
Alle LL synchronisiert und de-skewed'

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6961347 B1
- US 20050008041 A1